Europäisches Patentamt

(19) European Patent Office

Office européen des brevets

(11) Numéro de publication: **0 013 236**

**A1**

(12) # DEMANDE DE BREVET EUROPEEN

(21) Numéro de dépôt: **79401058.7**

(22) Date de dépôt: **21.12.79**

(51) Int. Cl.³: **A 01 B 3/421**

---

(30) Priorité: **22.12.78 FR 7836150**

(43) Date de publication de la demande:
**09.07.80 Bulletin 80/14**

(84) Etats Contractants Désignés:
**AT BE CH DE GB IT NL SE**

(71) Demandeur: ETABLISSEMENTS BEAUVAIS ROBIN -
EBRA société anonyme française
28, rue du Maine
F-49 Angers(FR)

(72) Inventeur: Caillemer, Philippe
28, rue du Maine
F-49 Angers(FR)

(74) Mandataire: Schrimpf, Robert
Cabinet Regimbeau 26, Avenue Kléber
F-75116 Paris(FR)

---

(54) **Charrue réversible.**

(57) L'invention concerne une charrue réversible.

Le pivotement de la charrue est commandé par un vérin 10 situé en avant de la ligne d'attelage basse 5 de la charrue au tracteur.

En adoptant la disposition de l'invention, on peut rapprocher au maximum la barre d'attelage de la masse de la charrue puisqu'ill n'est plus nécessaire de réserver un espace intermédiaire pour le vérin, ce rapprochement contribuant de façon significative à réduire les contraintes mécaniques de l'association charrue-tête d'attelage.

FIG. 2

EP 0 013 236 A1

Croydon Printing Company Ltd.

CHARRUE REVERSIBLE

La présente invention concerne une charrue réversible et, plus précisément, le dispositif qui commande le retournement de la charrue.

Une charrue réversible comporte, de façon en soi connue, un âge longitudinal sur lequel sont fixés les socs de la charrue et dont une extrémité est montée à rotation dans une structure dite "tête" de la charrue équipée de moyens pour pouvoir être attelée à un tracteur ainsi que de moyens de retournement pour pouvoir provoquer une rotation de l'âge afin d'escamoter une file de socs et d'amener en position de travail une autre file de socs.

On connaît des dispositifs de retournement qui sont à commande purement mécanique et on connaît des dispositifs qui comportent un vérin ; une réalisation conforme à ce dernier type est décrite par exemple dans la demande de brevet français 77 06277 déposée le 3 mars 1977.

La présente invention concerne également une réalisation du type à vérin et elle est fondamentalement caractérisée par le positionnement du vérin dans la tête de la charrue.

Selon l'invention, en effet, le vérin est situé en avant de la ligne d'attelage basse de la tête de la charrue au tracteur, c'est-à-dire entre cette ligne d'attelage et le tracteur.

De façon en soi connue, la tête de la charrue qui doit permettre l'attelage de la charrue au système trois points du tracteur comporte un point d'attelage haut et deux points d'attelage bas, les deux points d'attelage bas définissant une ligne d'attelage basse et étant généralement conçus pour recevoir une barre d'attelage.

Dans les dispositifs connus, le vérin est situé en arrière de la barre d'attelage, comme c'est le cas dans la réalisation décrite dans la demande de brevet précitée, ce qui contribue à éloigner la barre d'attelage de la masse de la charrue. En adoptant la disposition de l'invention, on peut rapprocher au maximum la barre d'attelage de la masse de la charrue puisqu'il n'est plus nécessaire de réserver un espace intermédiaire pour le vérin, ce rapprochement contribuant de façon significative à réduire les contraintes mécaniques de l'association charrue-tête d'attelage.

L'invention permet en outre d'incorporer véritablement le vérin dans la tête de la charrue alors que dans la réalisation selon la demande de brevet précitée, le vérin se trouve, comme à l'accoutumée, à l'extérieur de la tête de la charrue.

Cette incorporation, selon l'invention, du vérin dans l'enveloppe constituée par la tête de la charrue contribue à la protection du vérin contre les agressions extérieures.

On décrira ci-après une réalisation conforme à la présente invention, en référence aux figures du dessin joint, la description et les figures faisant apparaître d'autres caractéristiques importantes de l'invention.

Sur les figures :

- la figure 1 est un schéma de principe d'une charrue réversible ;

- la figure 2 est une élévation d'une tête de charrue selon une réalisation de l'invention ;

- la figure 3 est une vue de dessus de la tête de la charrue, et

- la figure 4 est une coupe verticale de la tête de la charrue suivant le plan brisé IV-IV de la figure 3.

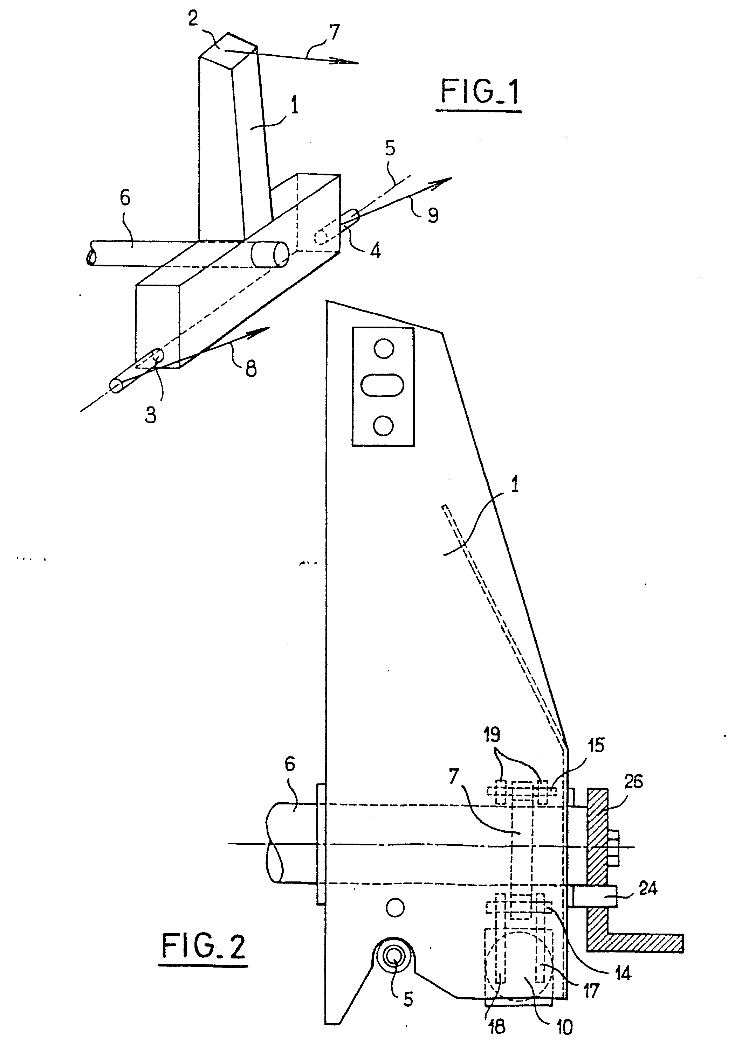

Sur la figure 1, on a représenté schématiquement une tête de charrue 1 conçue d'une part pour son accrochage à un tracteur et, d'autre part, pour recevoir l'extrémité de l'âge de la charrue. Pour l'attelage au tracteur, la tête de la charrue présente un point d'attelage haut 2 et deux points d'attelage bas 3,4, les deux points d'attelage bas définissant une ligne d'attelage basse 5. Généralement, les deux points d'attelage bas sont des paliers ou des crochets qui assurent la mise en place d'une barre d'attelage et, dans d'autres cas, la tête d'attelage comporte elle-même une barre d'attelage et l'on comprendra que la présente invention n'est pas limitée à une réalisation particulière pour définir la ligne d'attelage basse.

Sur la figure, on a supposé que le tracteur se trouve à main droite de la tête de la charrue, la charrue elle-même se trouvant par conséquent à main gauche de la tête de la charrue avec son âge 6 introduit dans la tête de la charrue. Les flèches 7, 8 et 9 schématisent les liaisons entre les éléments d'attelage de la tête de la charrue et le système d'attelage trois points du tracteur.

Selon la présente invention, la rotation de l'âge 6 qui est nécessaire pour obtenir le retournement de la charrue est commandée par un vérin 10 qui est situé en avant de la ligne d'attelage 5 (c'est-à-dire entre la ligne d'attelage et le tracteur), sous l'âge 6 ou en majeure partie sous l'âge 6, sensiblement horizontal, c'est-à-dire avec une inclinaison inférieure à 45° et de préférence inférieure à 30° par rapport à la ligne d'attelage, comme cela apparaît sur les figures 2 à 4.

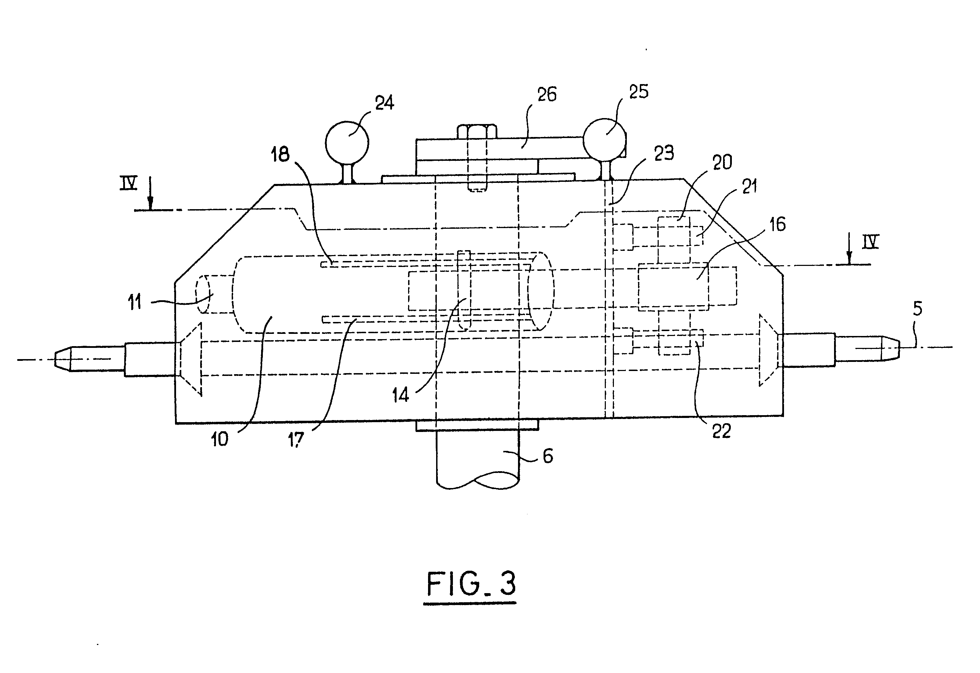

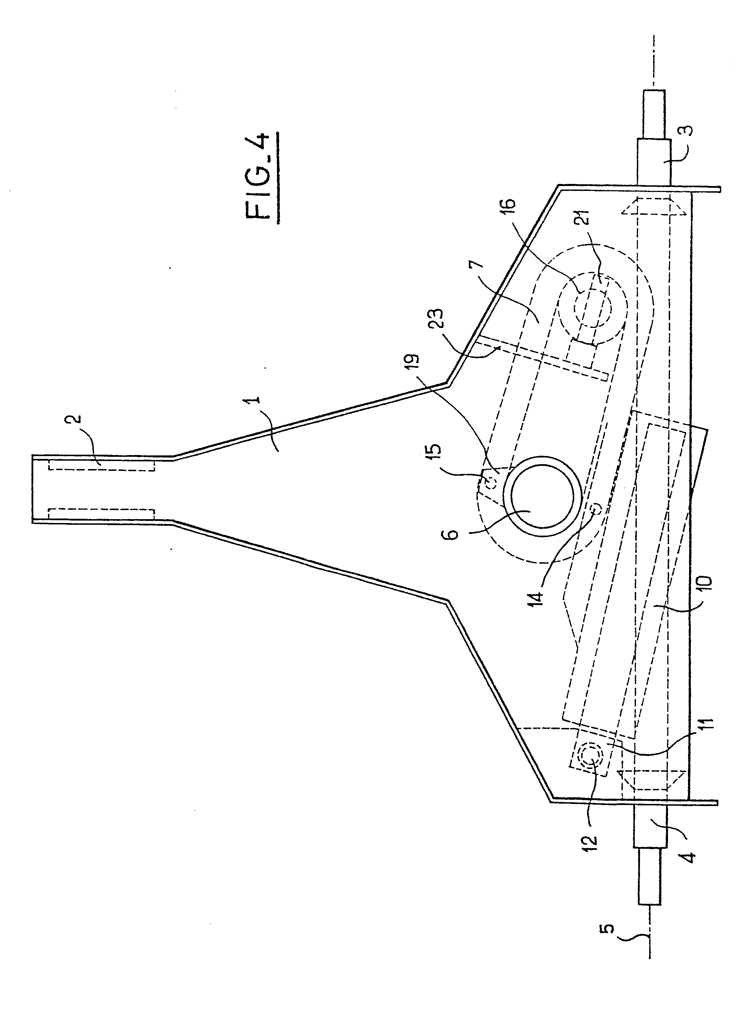

Selon une particularité de cette réalisation, la tige 11 du vérin est fixée à la tête de la charrue, par exemple par une broche 12 et c'est le cylindre 10 du vérin qui se déplacera lors du fonctionnement du vérin. Ce cylindre est relié à l'âge 6 de la charrue par une transmission qui comprend un élément sans fin souple 13 qui présente un point de fixation 14 au cylindre 10 et un point de fixation 15 à l'âge 6. L'élément souple sans fin 13 est par exemple une chaîne qui passe d'une part autour de l'âge 6 et, d'autre part, autour d'une poulie de renvoi 16. Le point de fixation 14 est par exemple une broche (figure 3) supportée par deux joues 17, 18 solidaires du cylindre 10. Le point de fixation 15 est par exemple une broche montée dans deux joues 19 rapportées sur l'âge 6. La poulie de renvoi 16 est montée dans la tête de la charrue par des moyens quelconque appropriés et, par exemple, au moyen d'un axe 20 porté par deux brides 21, 22 fixées à une paroi interne 23 de la tête de la charrue (figures 3 et 4).

Le vérin 10 est un vérin à double effet et sa course est calculée pour que le déplacement du point 14 provoque une rotation du point 15 de l'ordre de 180°.

Selon une particularité de l'invention, les positions de service de l'âge 6 de la charrue sont définies par deux butées 24, 25 réglables, solidaires de la tête de la charrue et situées en avant de cette tête, du côté du tracteur.

L'extrémité de l'âge 6 qui est située du côté du tracteur est munie d'une pièce transversale 26, par exemple boulonnée dans cette extrémité et apte à venir en contact de butée avec la butée 24 ou avec la butée 25. La course du vérin 10 est choisie en sorte que le contact de l'élément 26 avec la butée 24 ou 25 soit obtenu légèrement avant la fin de cette course et le maintien de la pression d'alimentation du vérin suffit à maintenir le contact de butée et, par conséquent, à vérouiller l'âge de la charrue dans sa position de travail.

L'invention n'est pas limitée à la réalisation qui a été décrite. Par exemple, la chaîne qui assure la transmission entre le vérin et l'âge peut être remplacée par une courroie ou un câble ou encore par une transmission rigide, par exemple du type à crémaillère.

## REVENDICATIONS

1. Charrue réversible comportant une tête de charrue à atteler à un tracteur et dans laquelle est montée à pivotement l'extrémité de l'âge de la charrue, la tête de la charrue comportant des moyens définissant une ligne d'attelage basse pour l'attelage au tracteur, et la tête de la charrue comportant un vérin relié par une transmission à l'âge de la charrue en sorte que la translation du vérin provoque le pivotement désiré de l'âge, caractérisée par le fait que ce vérin est situé en avant de la ligne d'attelage basse.

2. Charrue selon la revendication 1, caractérisée par le fait que le vérin est situé au moins en majeure partie sous l'âge.

3. Charrue selon la revendication 1 ou 2, caractérisée par le fait que le vérin s'étend selon une direction qui forme avec la ligne d'attelage un angle inférieur à 45°.

4. Charrue selon l'une des revendications 1 à 3, caractérisée par le fait que le vérin est situé au moins en majeure partie à l'intérieur de la tête de la charrue.

5. Charrue selon l'une des revendications 1 à 4, caractérisée par le fait que ladite transmission comprend un élément sans fin souple solidaire de l'âge en un point et solidaire du vérin en un autre point.

6. Charrue selon l'une des revendications 1 à 5, caractérisée par le fait que la tige du vérin est fixée à la tête de la charrue en sorte que le fonctionnement du vérin se traduit par une translation du cylindre du vérin.

7. Charrue selon l'une des revendications 1 à 6, caractérisée par le fait que sur l'extrémité avant de l'âge est rapporté un élément apte à venir en contact de butée, avec l'une ou l'autre de deux butées réglables fixées à la tête de la charrue, pour déterminer les positions de travail de l'âge de la charrue.

0013236

1/3

FIG_1

FIG_2

FIG. 3

0013236

0013236

FIG_4

| Categorie | Citation du document avec indication en cas de besoin des parties pertinentes | Revendica-tion concernee |
|---|---|---|
| X | <u>BE - A - 863 630</u> (CHARRUES DETHY)<br>* Page 7, revendication 1; figures 1,2 * | 1 |
| X | <u>AT - E - 325 877</u> (BERGER)<br>* Figures 1,2,5 * | 1,3 |
| X | <u>AT - B - 318 266</u> (BERGER)<br>* Page 5, lignes 14-23; figures 1-6 * | 1,5 |
| X | <u>FR - A - 1 286 628</u> (MELOTTE)<br>* Page 2, colonne de droite, trois derniers paragraphes; page 3, colonne de gauche; paragraphes 1-5; figures 9,9A, 10,10A * | 1-4,6,7 |
| | <u>JI - A - 1 100 549</u> (FERGUSON DE FRANCE)<br>* Figures 1,3,4 * | 3,4,5 |
| X | <u>US - A - 3 386 518</u> (MELLEN)<br>* Colonne 5, lignes 3-75; colonne 6, lignes 1-6; figures 1,2 * | 1,7 |
| X | <u>US - A - 3 307 635</u> (WARD)<br>* Colonne 2, lignes 37-43; figures 1,2,3 * | 1 |

**DOCUMENTS CONSIDERES COMME PERTINENTS**

./.

**CLASSEMENT DE LA DEMANDE (Int Cl )**

A 01 B 3/421

**DOMAINES TECHNIQUES RECHERCHES (Int Cl )**

A 01 B

**CATEGORIE DES DOCUMENTS CITES**

X: particulierement pertinent
A: arrière-plan technologique
O: divulgation non-ecrite
P: document intercalaire
T: théorie ou principe a la base de l'invention
E: demande faisant interference
D: document cite dans la demande
L: document cite pour d'autres raisons
&: membre de la méme famille, document correspondant

Le present rapport de recherche a ete etabli pour toutes les revendications

| Lieu de la recherche | Date d'achevement de la recherche | Examinateur |
|---|---|---|
| La Haye | 25-03-1980 | VERDOODT |

OEB Form 1503.1 06.78

Office européen
des brevets

**RAPPORT DE RECHERCHE EUROPEENNE**

| Catégorie | DOCUMENTS CONSIDERES COMME PERTINENTS | | CLASSEMENT DE LA DEMANDE (Int. Cl. ³) |
|---|---|---|---|
| | Citation du document avec indication, en cas de besoin, des parties pertinentes | Revendication concernée | |
| X | US - A - 3 305 027 (WALBERG)<br>* Colonne 1, lignes 69-72; colonne 2, lignes 1-26; figures 1-4 *<br>-- | 1,7 | |
| X | US - A - 3 181 890 (MELLEN)<br>* Figures 1,2,3 *<br>-- | 1,7 | |
| | US - A - 3 175 623 (WARD)<br>* Figures 1,2 *<br>-- | 3,5 | DOMAINES TECHNIQUES RECHERCHES (Int. Cl. ³) |
| X | US - A - 3 107 735 (MELLEN)<br>* Colonne 4, lignes 62-75; figures 1,2,4,5 *<br>-- | 1,7 | |
| | US - A - 2 633 786 (PURSCHE)<br>* Colonne 3, lignes 61-75; colonne 4, lignes 1-17 *<br>-- | 5 | |
| AD | FR - A - 2 382 161 (ETABL. BEAUVAIS ROBIN-EBRA)<br>* Figure 2 *<br>---- | 1 | |

OEB Form 1503.2 06.78